# FASCICULE DE BREVET EUROPEEN

(11) **EP 3 921 680 B1**
(45) Date de publication et mention de la délivrance du brevet: **15.02.2023**
(21) Numéro de dépôt: 20707159.8
(22) Date de dépôt: 06.02.2020
(51) Int. Cl.: G02B 6/00, G02B 6/42, F21Y 115/10

(54) **SYSTÈME D'ÉMISSION LUMINEUSE A L'AIDE D'UNE LED DE FORTE PUISSANCE**
LICHTEMISSIONSVORRICHTUNG MIT EINER HOCHLEISTUNGS-LED
LIGHT EMISSION SYSTEM USING A HIGH-POWERED LED

(30) Priorité: 06.02.2019 FR 1901195
(43) Date de publication de la demande: 15.12.2021
(73) Titulaire: EFI Lighting, 01700 Miribel (FR)
(72) Inventeur: BERTUEL, Edgar, 69003 LYON (FR)
(74) Mandataire: Cabinet Beau de Loménie
(86) Numéro de dépôt international: PCT/FR2020/050212
(87) Numéro de publication internationale: WO 2020/161444

(56) Documents cités:
- EP-A1- 1 830 125
- WO-A2-2006/026720
- US-A1- 2004 012 965
- US-A1- 2008 151 547
- US-A1- 2010 142 207

## Description

### Domaine Technique

L'objet de l'invention concerne le domaine technique des dispositifs d'émission lumineuse à l'aide d'une diode électroluminescente (LED) de forte puissance et elle vise plus précisément les dispositifs assurant le couplage de la lumière émise par la diode, dans un faisceau à fibres optiques ou un toron de fibres optiques.

L'objet de l'invention trouve des applications particulièrement avantageuses dans les domaines nécessitant une forte puissance lumineuse pour assurer une fonction d'éclairage ou de signalisation comme par exemple dans le secteur automobile.

### Technique antérieure

La demande de brevet WO 2011/045189 décrit un module LED comportant une diode fixée sur un support assurant également une fonction de dissipation de la chaleur produite par la diode. Ce module comporte également un coupleur de lumière c'est-à-dire un élément optique agencé pour coupler la lumière émise par la diode dans la surface d'entrée d'un faisceau de fibres optiques. Le coupleur doit être placé entre la diode et le faisceau optique dans une position optimale pour minimiser les pertes lumineuses de couplage. Ce document ne décrit aucun montage du coupleur par rapport à la diode. Ainsi, ce document ne propose aucune solution technique pour assurer un positionnement fixe du coupleur quelles que soient les sollicitations mécaniques que subit le module.

De même, le brevet EP 1 378 011 décrit un module d'éclairage comportant une diode électroluminescente dont la lumière est couplée via une lentille de collimation. Ce brevet ne propose aucune solution pour assurer un positionnement fixe de la lentille de collimation par rapport à la diode. Ainsi, ce module n'est pas adapté pour subir des vibrations mécaniques ou être placé dans un environnement hostile humide ou poussiéreux par exemple.

La demande de brevet WO 2006/026720 décrit un dispositif d'émission lumineuse à l'aide d'une diode émettrice montée sur un support sur lequel vient en contact, une surface d'appui d'un élément optique de couplage présentant une surface d'entrée en regard de la diode. Le support de la diode est monté dans un boîtier aménagé pour recevoir une douille de positionnement pour l'élément optique de couplage. Cette douille de positionnement est montée à l'aide d'un couvercle fixé sur le boîtier et pourvu d'une fibre optique située à distance de la surface de sortie de l'élément optique de couplage. Un tel montage ne permet pas d'assurer un bon couplage lumineux entre la diode et la fibre optique. Par ailleurs, un tel dispositif met en oeuvre un grand nombre de pièces ne permettant pas un montage simple et rapide.

La demande de brevet EP 1 830 125 décrit une source lumineuse comportant une diode émettrice montée sur un radiateur et placée en regard d'un élément optique de couplage positionné à l'aide d'un support fixé au radiateur. Le support est pourvu d'un guide de lumière débouchant devant une lentille et situé à distance de l'élément optique de couplage. Un tel montage ne permet pas d'obtenir un bon couplage optique de la lumière émise par la diode. Ce document ne donne pas de solution technique pour assurer un couplage efficace de la lumière émise par une diode dans un faisceau faisant partie d'un dispositif soumis à des vibrations.

### Exposé de l'invention

L'objet de l'invention vise à remédier aux inconvénients de l'art antérieur en proposant un nouveau système d'émission de lumière à diode électroluminescente, conçu pour permettre un montage précis, simple et durable dans le temps, de l'élément de couplage optique par rapport à un faisceau à fibre optique, tout en permettant une évacuation efficace de la chaleur produite par la diode électroluminescente.

Un autre objet de l'invention est de proposer un nouveau système d'émission lumineuse conçu pour être installé dans des environnements agressifs ou soumis à des vibrations.

Pour atteindre un tel objectif, l'objet de l'invention concerne un système d'émission lumineuse comportant :
- un dispositif d'émission lumineuse à l'aide d'une diode émettrice fixée sur un support et dont la lumière est destinée à être récupérée par un faisceau à fibre optique, le dispositif comportant un boîtier pourvu d'un système de positionnement pour un élément optique de couplage possédant une surface de sortie débouchant dans un puits de réception du faisceau, l'élément optique de couplage comportant une surface d'appui avec le support positionnant la surface d'entrée de l'élément optique de couplage en regard de la diode, le support de la diode étant placé en contact avec une coque de dissipation thermique assemblée au boîtier par un dispositif de fixation assurant le montage de l'élément optique de couplage ;
- et un faisceau positionné dans le puits du boîtier pour capter la lumière émise par la surface de sortie de l'élément optique de couplage, le système d'émission lumineuse étant caractérisé en ce que le faisceau est pourvu d'un manchon présentant une face transversale en appui sur l'élément optique de couplage, en dehors de la surface de sortie, le manchon comportant un système de blocage en translation.

De plus, le système selon l'invention peut comporter en outre en combinaison au moins l'une et/ou l'autre des caractéristiques additionnelles suivantes :
- l'élément optique de couplage comporte un corps de révolution avec une section augmentant à partir de sa surface d'entrée, le corps de révolution présentant une collerette de positionnement s'étendant de manière continue en saillie autour du corps de révolution et possédant une face de sortie présentant dans sa partie centrale, la surface de sortie pour la lumière et en dehors de cette surface de sortie, des pattes s'étendant en saillie pour présenter à leurs extrémités, la surface d'appui avec le support de la diode émettrice ;
- au moins une patte est pourvue à son extrémité d'un doigt de centrage engagé dans un trou aménagé dans le support ;
- le système de positionnement pour l'élément optique de couplage comporte un logement de forme prismatique coopérant avec la collerette de l'élément optique de couplage présentant une forme complémentaire ;
- un joint d'étanchéité est interposé entre le boîtier et la coque de dissipation thermique ;
- le dispositif de fixation entre le boîtier et la coque de dissipation thermique comporte des vis d'assemblage traversant le boîtier pour s'ancrer dans la coque ;
- le support de montage de la diode émettrice est relié par des connexions à une carte de circuit imprimé de pilotage du fonctionnement de la diode ;
- le manchon et l'élément optique de couplage forment une seule pièce ;
- le manchon et l'élément optique de couplage sont solidaires ;
- le faisceau est en contact avec la surface de sortie de l'élément optique de couplage.

### Brève description des dessins

[Fig. 1] La Figure 1 est une vue en perspective montrant extérieurement un exemple du dispositif d'émission lumineuse conforme à l'invention.
[Fig. 2] La Figure 2 représente une vue en coupe d'un exemple de réalisation d'un système d'émission lumineuse illustré à la Fig.1.
[Fig. 3] La Figure 3 représente une vue en coupe d'un exemple de réalisation du système d'émission lumineuse illustré à la Fig. 1.
[Fig. 4] La Figure 4 représente une vue interne du dispositif d'émission lumineuse, sans le boîtier.
[Fig. 5] La Figure 5 représente une vue de dessus du dispositif d'émission lumineuse illustré à la Fig. 4.
[Fig. 6] La Figure 6 est une vue de dessus en coupe du dispositif d'émission lumineuse, prise au niveau du boîtier.
] La Figure 7 est une vue en coupe d'un autre exemple de réalisation d'un système d'émission lumineuse conforme à l'invention.
] La Figure 8 est une vue en coupe d'un autre exemple de réalisation d'un système d'émission lumineuse conforme à l'invention.

### Description des modes de réalisation

L'objet de l'invention concerne un dispositif d'émission lumineuse 1 à l'aide d'une diode émettrice 2 de forte puissance dont la lumière est destinée à être récupérée par un faisceau ou un toron 3 de fibres optiques afin de constituer ensemble un système d'émission lumineuse I. Cette diode 2 est une diode électroluminescente de tous types connus en soi. De même, le faisceau 3 à fibre(s) optique(s) peut comporter une ou plusieurs fibres optiques de toutes natures. Un tel dispositif d'émission lumineuse 1 peut être utilisé pour tous types d'éclairage et en particulier dans l'automobile.

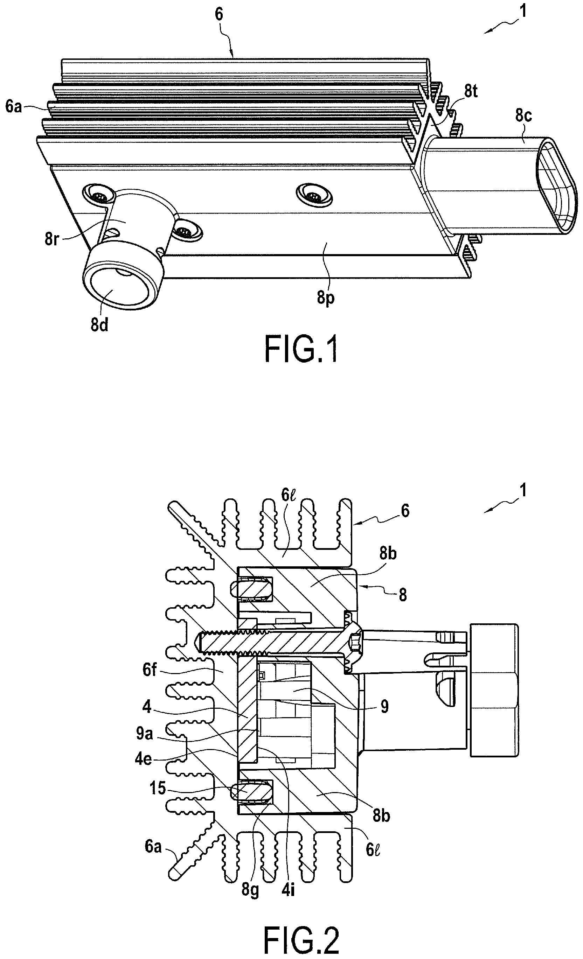

Le dispositif d'émission lumineuse 1 comporte un support 4 de fixation pour la diode 2. Ce support 4 tel une plaquette de circuit imprimé présente une surface interne 4i et une surface externe 4e. Le dispositif d'émission lumineuse 1 comporte également une coque de dissipation thermique 6 en contact avec le support 4 de la diode 2 et en particulier avec la surface externe 4e. Tel que cela ressort plus précisément des Fig. 1 à 4, la coque de dissipation thermique 6 se présente sous la forme d'un profilé de section en U, présentant un fond 6f à partir duquel s'élèvent de part et d'autre, deux ailes latérales 6l. Cette coque de dissipation thermique 6 est munie extérieurement, d'ailettes 6a de dissipation de la chaleur alors que la coque 6 possède intérieurement des faces internes planes ou lisses. Ainsi, la face interne du fond 6f de cette coque de dissipation thermique 6 est en contact avec la surface externe 4e du support 4. Le support 4 est fixé au fond 6f de la coque par tous moyens appropriés.

Le dispositif d'émission lumineuse 1 comporte un boîtier 8 dans lequel est monté un élément optique de couplage 9 adapté pour coupler la lumière émise par la diode 2, dans la surface d'entrée du faisceau de fibres optiques 3. Le boîtier 8 présente une paroi principale 8p à partir de laquelle s'élèvent de part et d'autre, deux branches latérales 8b. Les dimensions boîtier 8 sont adaptées de manière que la coque de dissipation thermique 6 puisse s'emboîter sur le boîtier 8 de manière que le fond 6f de cette coque de dissipation thermique 6 se trouve positionnée en face de la paroi principale 8p pour fermer le boîtier. Tel que cela ressort notamment des Fig. 1 et 2, les ailes latérales 6l de la coque de dissipation thermique s'étendent de part et d'autre des branches latérales 8b du boîtier.

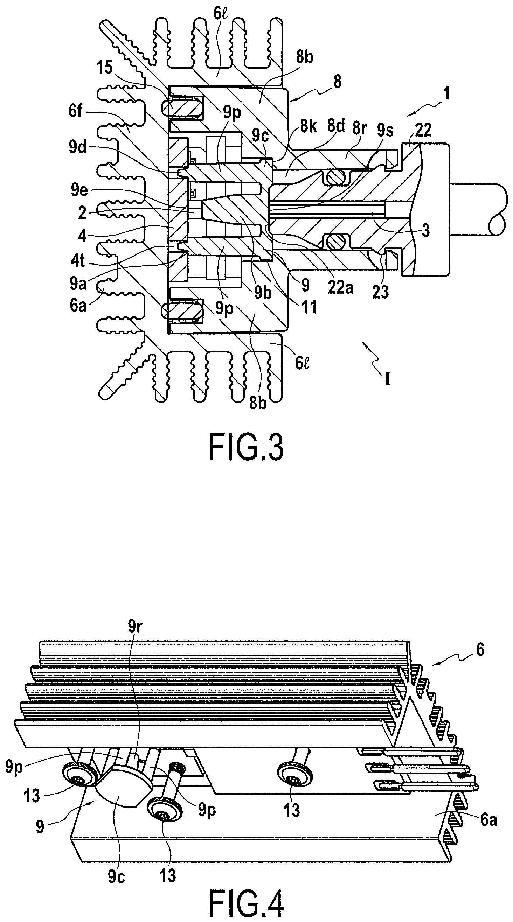

Le boîtier 8 comporte également à chacune de ses extrémités, une paroi transversale de fermeture 8t dont l'une est équipée d'un connecteur d'alimentation électrique 8c. La paroi principale 8p du boîtier 8 est pourvue d'un manchon de raccordement 8r délimitant intérieurement, un puits 8d de réception du faisceau 3 (Fig. 3).

Conformément à l'invention, le boîtier 8 comporte un système de maintien ou de positionnement 11 pour l'élément optique de couplage 9 qui est monté entre le boîtier 8 et le support 4. En position montée, l'élément optique de couplage 9 est positionné pour récupérer la lumière produite par la diode 2 et l'amener au faisceau 3. L'élément optique de couplage 9 comporte une surface d'entrée 9e pour la lumière sortant de la diode 2 et positionnée en regard ou en vis-à-vis de la surface émettrice de la diode 2. L'élément optique de couplage 9 comporte également une surface de sortie 9s pour la lumière, positionnée dans le puits 8d de réception du faisceau 3 de manière que la lumière puisse être récupérée par le faisceau 3.

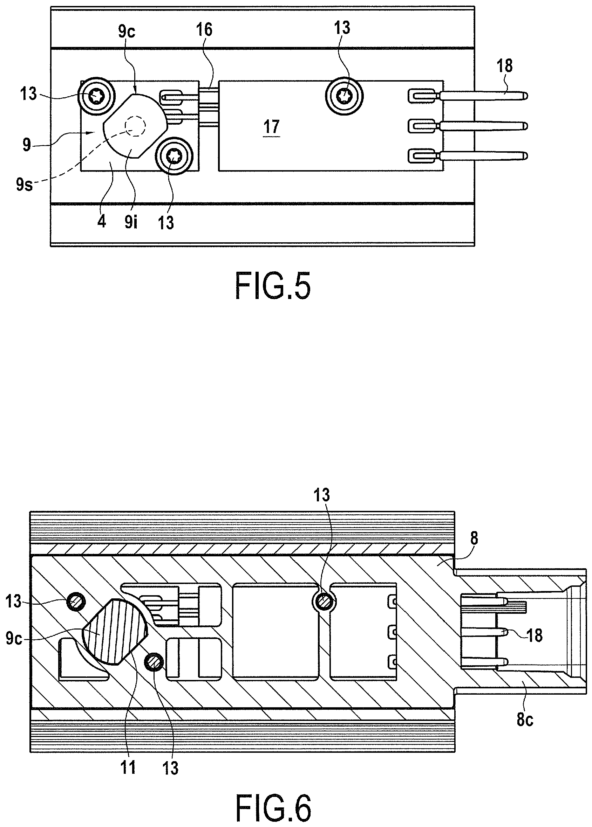

Selon une variante de réalisation, l'élément optique de couplage 9 comporte un corps de révolution 9r avec une section augmentant à partir de sa surface d'entrée 9e. Le corps de révolution 9r présente à l'opposé de sa surface d'entrée 9e, une collerette de positionnement 9c s'étendant transversalement par rapport au corps de révolution. Cette collerette de positionnement 9c présente, dans sa partie centrale venant dans le prolongement du corps de révolution 9r, la surface de sortie 9s pour la lumière (Fig. 5). La partie centrale de la collerette de positionnement 9c est prolongée transversalement par une partie périphérique 9i qui déborde transversalement tout autour du corps de révolution 9r.

Tel que cela ressort plus précisément de la Fig. 6, la collerette de positionnement 9c est destinée à être montée dans le boîtier 8. A cet effet, le boîtier 8 comporte en tant que système de positionnement 11, un logement de forme complémentaire à la collerette de positionnement 9c. Dans l'exemple illustré, la collerette de positionnement 9c présente une forme prismatique coopérant avec le logement de forme prismatique complémentaire. Selon cet exemple, la collerette de positionnement 9c possède deux bords droits reliés de part et d'autre par des bords en arc de cercle.

II est à noter que le logement 11 débouche dans sa partie centrale, dans le puits 8d de réception du faisceau 3. Au moins une partie de la partie périphérique 9i de la collerette de positionnement 9c vient en appui dans le logement 11 alors que la partie centrale définissant la surface de sortie 9s s'ouvre dans le puits 8d de réception du faisceau 3. Le logement 11 est délimité par un fond 8k aménagé dans le boîtier 8 et pouvant servir de surface de butée pour l'élément optique de couplage 9. Ce fond 8k permet ainsi de maintenir en position l'élément optique de couplage 9 en l'absence notamment du faisceau 3 comme cela sera expliqué dans la suite de la description.

L'élément optique de couplage 9 comporte également une surface d'appui 9a avec le support 4 de manière à positionner la surface d'entrée 9e de l'élément optique de couplage dans une position pour optimiser le couplage de la lumière. L'élément optique de couplage 9 est ainsi interposé en appui entre le support 4 et le boîtier 8. L'élément optique de couplage 9 comporte un corps d'appui 9p s'étendant à partir de la partie périphérique 9i de la collerette de positionnement 9c, sensiblement parallèlement au corps de révolution 9r. Ce corps d'appui présente à son extrémité libre opposée à la collerette de positionnement 9c, la surface d'appui 9a avec le support. Dans l'exemple de réalisation illustré, ce corps d'appui est réalisé par au moins deux et dans l'exemple illustré, par quatre pattes 9p s'étendant à partir de la collerette de positionnement 9c, en dehors de la surface de sortie 9s de l'élément optique de couplage 9. Ces pattes 9p sont distribuées régulièrement angulairement autour du corps de révolution 9r. Ces pattes 9p présentent à leurs extrémités la surface d'appui 9a avec le support 4.

Selon la variante de réalisation illustrée sur les dessins, au moins une et par exemple deux pattes 9p symétriquement opposées sont pourvues chacune à son extrémité, d'un doigt de centrage 9d engagé dans un trou 4t aménagé dans le support 4.

Le boîtier 8 et la coque de dissipation thermique 6 sont assemblés ensemble par un dispositif de fixation 13 qui permet le montage de l'élément optique de couplage 9 entre le boîtier et le support 4. Le dispositif de fixation 13 peut être réalisé de toute manière appropriée. Dans l'exemple de réalisation illustré sur les dessins, le dispositif de fixation 13 entre le boîtier 8 et la coque de dissipation thermique 9 comporte des vis d'assemblage 13 traversant le boîtier pour s'ancrer dans la coque 9. Dans l'exemple illustré, trois vis d'assemblage 13 sont utilisées mais il est clair que le nombre de vis peut être différent. De même, le dispositif de fixation 13 peut être de nature différente comme de type par encliquetage par exemple.

Selon une variante avantageuse de réalisation, un joint d'étanchéité 15 est interposé entre le boîtier 4 et la coque de dissipation thermique 9. Ce joint d'étanchéité 15 est monté dans une gorge 8g aménagée à l'extrémité des deux branches latérales 8b et des parois transversales de fermeture 8t. Ce joint d'étanchéité 15 est ainsi en appui sur le fond 6f de la coque de dissipation thermique 6.

Selon une variante avantageuse de réalisation, le support 4 de montage de la diode émettrice 2 est relié par des connexions 16 à une carte 17 de circuit imprimé permettant de piloter le fonctionnement de la diode. Cette carte 17 est pourvue de cosses 18 débouchant dans le connecteur d'alimentation électrique 8c de raccordement à un câble non représenté. Cette carte 17 qui est équipée de composants électroniques pour le fonctionnement notamment de la diode, ne se trouve pas soumis directement à la chaleur produite par la diode.

Un tel dispositif d'émission lumineuse 1 permet de positionner de manière fixe et précise l'élément optique de couplage 9 par rapport à la diode 2, assurant un couplage optimal de la lumière émise par la diode 2. Ainsi, la surface d'entrée 9e de l'élément optique de couplage 9 est positionnée à une distance déterminée fixe par rapport à la diode 2. L'élément optique de couplage 9 reste dans cette position quelles que soient les sollicitations mécaniques que le boîtier subit. De plus, ce dispositif 1 permet une bonne dissipation de la chaleur émise par la diode. Ce dispositif d'émission lumineuse 1 est apte à recevoir un faisceau 3 pour constituer un système d'émission lumineuse I.

Tel que cela ressort plus précisément de l'exemple de réalisation illustré à la Fig. 3, le faisceau 3 est pourvu d'un manchon 22 positionné dans le puits 8d du boîtier pour capter la lumière émise par la surface de sortie 9s de l'élément optique de couplage 9. Le manchon 22 présente une face transversale 22a en appui sur la partie périphérique 9i de la collerette de positionnement 9c, en dehors de la surface de sortie 9s. Dans cette position, le faisceau de fibres optiques 3 est positionné en vis-à-vis de la surface de sortie 9s de l'élément optique de couplage 9. De plus, comme illustré sur les dessins, le faisceau 3 est positionné en contact avec la surface de sortie 9s de l'élément optique de couplage 9 dans la mesure où le faisceau s'étend jusqu'à la face transversale 22a du manchon 22. Une telle disposition permet un couplage optimisé de la lumière.

Le manchon 22 regroupant le faisceau 3 présente un système de blocage en translation 23 permettant l'arrêt de l'enfoncement du manchon 22 à l'intérieur du puits 8d de réception du faisceau 3. Le système de blocage en translation 23 assure ainsi une liaison au moins en translation entre le manchon 22 et le boîtier 8. Ce système de blocage en translation 23 permet de bloquer l'enfoncement du manchon 22 de manière que le manchon 22 voire le faisceau 3, soit en appui sur l'élément optique de couplage 9 qui peut ainsi ne plus être en contact avec le fond 8k. Par exemple, ce système de blocage en translation 23 peut être réalisé par des ergots portés par le manchon 22 et destinés à s'engager dans des orifices aménagés dans le manchon de raccordement 8r. Bien entendu, le système de blocage en translation 23 peut être réalisé différemment par collage ou un circlip par exemple.

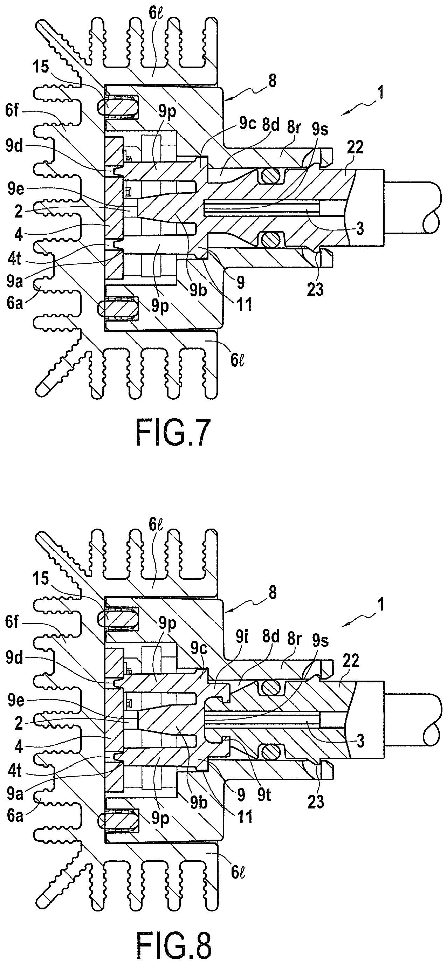

Dans l'exemple illustré à la Fig. 3, le manchon 22 est en appui sur l'élément optique de couplage 9 et forme une pièce indépendante de l'élément optique de couplage 9. La Fig. 7 illustre un autre exemple de réalisation dans lequel le manchon 22 et l'élément optique de couplage 9 forment une seule pièce. Selon cet exemple, le manchon 22 et l'élément optique de couplage 9 réalisé dans le prolongement du manchon 22 sont surmoulés sur le faisceau 3. Ainsi, l'élément optique de couplage 9 et le manchon 22 sont surmoulés sur le faisceau 3 de manière que le faisceau 3 soit en contact avec la surface de sortie 9s de l'élément optique de couplage 9.

La Fig. 8 illustre une autre variante de réalisation dans laquelle le manchon 22 et l'élément optique de couplage 9 sont deux pièces liées entre elles. Le manchon 22 et l'élément optique de couplage 9 sont solidaires par surmoulage. Dans l'exemple illustré, l'élément optique de couplage 9 est surmoulé à l'extrémité du manchon 22. A cet effet, l'élément optique de couplage 9 comporte par exemple une bague annulaire 9i s'étendant axialement à partir de la collerette de positionnement 9c et pourvue à son extrémité d'un bord tombé 9t venant s'ancrer sur l'extérieur du manchon 22. Selon cette variante, le faisceau 3 est en contact avec la surface de sortie 9s de l'élément optique de couplage 9.

Selon les variantes de réalisation illustrées aux Fig. 3, 7 et 8, le faisceau 3 est en contact avec la surface de sortie 9s de l'élément optique de couplage 9 permettant d'optimiser le couplage optique. Bien entendu, dans l'une et/ou l'autre des variantes illustrées aux Fig. 3, 7 et 8, le faisceau 3 peut ne pas être en contact avec la surface de sortie 9s de l'élément optique de couplage 9.

Dans les variantes de réalisation illustrées aux Fig. 7 et 8, le faisceau 3 est monté solidaire de l'élément optique de couplage 9. Un tel montage permet de s'adapter à différents types de dispositifs d'émission lumineuse.

L'invention n'est pas limitée aux exemples décrits et représentés car diverses modifications peuvent y être apportées sans sortir de son cadre.

## Revendications

1. Système d'émission lumineuse comportant :
- un dispositif d'émission lumineuse (1) à l'aide d'une diode émettrice (2) fixée sur un support (4) et dont la lumière est destinée à être récupérée par un faisceau de fibre optique (3), le dispositif comportant un boîtier (8) pourvu d'un système de positionnement (11) pour un élément optique de couplage (9) possédant une surface de sortie (9s) débouchant dans un puits (8d) de réception du faisceau (3), l'élément optique de couplage (9) comportant une surface d'appui (9a) avec le support (4) positionnant la surface d'entrée (9c) de l'élément optique de couplage (9) en regard de la diode (2), le support (4) de la diode étant placé en contact avec une coque de dissipation thermique (6) assemblée au boîtier (8) par un dispositif de fixation (13) assurant le montage de l'élément optique de couplage (9) ;
- et le faisceau (3) étant positionné dans le puits (8d) du boîtier pour capter la lumière émise par la surface de sortie de l'élément optique de couplage, le système d'émission lumineuse étant **caractérisé en ce que** le faisceau (3) est pourvu d'un manchon (22) présentant une face transversale (22a) en appui sur l'élément optique de couplage (9), en dehors de la surface de sortie (9s), le manchon (22) comportant un système de blocage en translation (23).

2. Système d'émission lumineuse selon la revendication 1, selon lequel l'élément optique de couplage (9) comporte un corps de révolution (9r) avec une section augmentant à partir de sa surface d'entrée (9e), le corps de révolution (9r) présentant une collerette de positionnement (9c) s'étendant de manière continue en saillie autour du corps de révolution (9r) et possédant une face de sortie (9s) présentant dans sa partie centrale, la surface de sortie pour la lumière et en dehors de cette surface de sortie, des pattes (9p) s'étendant en saillie pour présenter à leurs extrémités, la surface d'appui (9a) avec le support (4) de la diode émettrice.

3. Système d'émission lumineuse selon la revendication 2, selon lequel au moins une patte (9p) est pourvue à son extrémité d'un doigt de centrage (9d) engagé dans un trou (4t) aménagé dans le support (4).

4. Système d'émission lumineuse selon l'une des revendications 2 à 3, selon lequel le système de positionnement (11) pour l'élément optique de couplage (9) comporte un logement de forme prismatique coopérant avec la collerette (9c) de l'élément optique de couplage (9) présentant une forme complémentaire.

5. Système d'émission lumineuse selon l'une des revendications précédentes, selon lequel un joint d'étanchéité (15) est interposé entre le boîtier (8) et la coque de dissipation thermique (6).

6. Système d'émission lumineuse selon l'une quelconque des revendications précédentes, selon lequel le dispositif de fixation (13) entre le boîtier (8) et la coque de dissipation thermique (6) comporte des vis d'assemblage traversant le boîtier pour s'ancrer dans la coque.

7. Système d'émission lumineuse selon l'une quelconque des revendications précédentes, selon lequel le support (4) de montage de la diode émettrice (2) est relié par des connexions (16) à une carte de circuit imprimé (17) de pilotage du fonctionnement de la diode.

8. Système d'émission lumineuse selon l'une quelconque des revendications précédentes, selon lequel le manchon (22) et l'élément optique de couplage (9) forment une seule pièce.

9. Système d'émission lumineuse selon l'une des revendications 1 à 7, selon lequel le manchon (22) et l'élément optique de couplage (9) sont solidaires par surmoulage.

10. Système d'émission lumineuse selon l'une quelconque des revendications précédentes, selon lequel le faisceau (3) est en contact avec la surface de sortie (9s) de l'élément optique de couplage (9).

## Patentansprüche

1. Lichtemissionssystem, umfassend:
- eine Vorrichtung zur Lichtemission (1) mit Hilfe einer emittierenden Diode (2), welche auf einem Träger (4) befestigt ist und deren Licht durch ein optisches Faserbündel (3) zurückgewonnen werden soll, wobei die Vorrichtung ein Gehäuse (8) umfasst, das mit einem Positionierungssystem (11) für ein optisches Kopplungselement (9) versehen ist, welches eine Austrittsfläche (9s) besitzt, die in eine Vertiefung (8d) zur Aufnahme des Bündels (3) mündet, wobei das optische Kopplungselement (9) eine Auflagefläche (9a) mit dem Träger (4), welche die Eintrittsfläche (9c) des optischen Kopplungselements (9) gegenüber der Diode (2) positioniert, umfasst, wobei der Träger (4) der Diode in Kontakt mit einer Wärmeableitungshülle (6) angeordnet ist, die über eine Befestigungsvorrichtung (3), welche die Montage des optischen Kopplungselements (9) sicherstellt, an dem Gehäuse (8) angebracht ist,
- und wobei das Bündel (3) in der Vertiefung (8d) des Gehäuses positioniert ist, um das über die Austrittsfläche des optischen Kopplungselements emittierte Licht aufzufangen, wobei das Lichtemissionssystem **dadurch gekennzeichnet ist, dass** das Bündel (3) mit einer Hülse (22) versehen ist, die eine Querfläche (22a) in Anlage an dem optischen Kopplungselement (9) außerhalb der Austrittsfläche (9s) aufweist, wobei die Hülse (22) ein Translationsblockiersystem (23) umfasst.

2. Lichtemissionssystem nach Anspruch 1, wonach das optische Kopplungselement (9) einen Rotationskörper (9r) mit einem von seiner Eintrittsfläche (9e) aus zunehmenden Querschnitt umfasst, wobei der, Rotationskörper (9r) einen Positionierungskragen (9r) aufweist, der sich um den Rotationskörper (9r) herum durchgehend vorspringend erstreckt und eine Austrittsseite (9s) besitzt, die in ihrem mittleren Teil die Austrittsfläche für das Licht sowie außerhalb dieser Austrittsfläche Laschen (9p) aufweist, die sich vorspringend erstrecken, um an ihren Enden die Auflagefläche (9a) mit dem Träger (4) der emittierenden Diode aufzuweisen.

3. Lichtemissionssystem nach Anspruch 2, wonach wenigstens eine Lasche (9p) an ihrem Ende mit einem Zentrierfinger (9d) versehen ist, der in ein in dem Träger (4) ausgebildetes Loch (4t) eingreift.

4. Lichtemissionssystem nach einem der Ansprüche 2 bis 3, wonach das Positionierungssystem (11) für das optische Kopplungselement (9) eine Aufnahme mit prismatischer Form umfasst, die mit dem Kragen (9c) des optischen Kopplungselements (9), der eine ergänzende Form aufweist, zusammenwirkt.

5. Lichtemissionssystem nach einem der vorhergehenden Ansprüche, wonach zwischen dem Gehäuse (8) und der Wärmeableitungshülle (6) eine Dichtung (15) eingesetzt ist.

6. Lichtemissionssystem nach einem der vorhergehenden Ansprüche, wonach die Befestigungsvorrichtung (13) zwischen dem Gehäuse (8) und der Wärmeableitungshülle (6) Montageschrauben umfasst, welche das Gehäuse durchgreifen, um sich in der Hülle zu verankern.

7. Lichtemissionssystem nach einem der vorhergehenden Ansprüche, wonach der Träger (4) zum Anbringen der emittierenden Diode (2) über Verbindungen (16) mit einer Leiterplatte (17) zum Steuern des Betriebs der Diode verbunden ist.

8. Lichtemissionssystem nach einem der vorhergehenden Ansprüche, wonach die Hülse (22) und das optische Kopplungselement (9) ein einziges Teil bilden.

9. Lichtemissionssystem nach einem der Ansprüche 1 bis 7, wonach die Hülse (22) und das optische Kopplungselement (9) durch Anformen fest miteinander verbunden sind.

10. Lichtemissionssystem nach einem der vorhergehenden Ansprüche, wonach das Bündel (3) mit der Austrittsfläche (9s) des optischen Kopplungselements (9) in Kontakt ist.

## Claims

1. A light emission system including:
- a light emission device (1) using an emitting diode (2) fixed on a support (4) and whose light is intended to be recovered by an optical fiber bundle (3), the device including a casing (8) provided with a positioning system (11) for an optical coupling element (9) having an exit surface (9s) opening out into a well (8d) for receiving the bundle (3), the optical coupling element (9) including a bearing surface (9a) with the support (4) positioning the exit surface (9c) of the optical coupling element (9) facing the diode (2), the support (4) of the diode being placed in contact with a heat dissipation shell (6) assembled to the casing (8) by a fixing device (13) ensuring the mounting of the optical coupling element (9);
- and the bundle (3) being positioned in the well (8d) of the casing to capture the light emitted by the exit surface of the optical coupling element, the light emission system being **characterized in that** the bundle (3) is provided with a sleeve (22) presenting a transverse face (22a) bearing on the optical coupling element (9), outside the exit surface (9s), the sleeve (22) including a translational blocking system (23).

2. The light emission system according to claim 1, according to which the optical coupling element (9) includes a body of revolution (9r) with a section increasing from its entry surface (9e), the body of revolution (9r) presenting a positioning flange (9c) continuously protruding around the body of revolution (9r) and having an exit face (9s) presenting, in its central portion, the exit surface for the light and, outside this exit surface, tabs (9p) protruding to present at their ends, the bearing surface (9a) with the support (4) of the emitting diode.

3. The light emission system according to claim 2, according to which at least one tab (9p) is provided at its end with a centering finger (9d) engaged in a hole (4t) arranged in the support (4).

4. The light emission system according to any of claims 2 to 3, according to which the positioning system (11) for the optical coupling element (9) includes a prismatic-shaped housing cooperating with the flange (9c) of the optical coupling element (9) presenting a complementary shape.

5. The light emission system according to any of the preceding claims, according to which a seal (15) is interposed between the casing (8) and the heat dissipation shell (6).

6. The light emission system according to any one of the preceding claims, according to which the fixing device (13) between the casing (8) and the heat dissipation shell (6) includes assembly screws passing through the casing to be anchored in the shell.

7. The light emission system according to any one of the preceding claims, according to which the support (4) for mounting the emitting diode (2) is connected by connections (16) to a printed circuit board (17) for controlling the operation of the diode.

8. The light emission system according to any one of the preceding claims, according to which the sleeve (22) and the optical coupling element (9) form a single piece.

9. The light emission system according to any of claims 1 to 7, according to which the sleeve (22) and the optical coupling element (9) are secured to each other by overmolding.

10. The light emission system according to any one of the preceding claims, according to which the bundle (3) is in contact with the exit surface (9s) of the optical coupling element (9).
